# EUROPÄISCHE PATENTSCHRIFT

(11) **EP 1 292 255 B1**
(45) Veröffentlichungstag und Bekanntmachung des Hinweises auf die Patenterteilung: **19.10.2005**
(21) Anmeldenummer: 01945148.3
(22) Anmeldetag: 17.05.2001
(51) Int. Cl.: A61F 9/01

(54) **VORRICHTUNG ZUR KONTROLLE DER ENERGIE UND/ODER DER POSITION EINES GEPULSTEN UND GESCANNTEN LASERSTRAHLS**
DEVICE FOR CONTROLLING ENERGY AND/OR THE POSITION OF A PULSED AND SCANNED LASER BEAM
DISPOSITIF DE CONTROLE DE L'ENERGIE ET/OU DE LA POSITION D'UN FAISCEAU LASER PULSE ET DEVIE

(30) Priorität: 17.05.2000 DE 10024079
(43) Veröffentlichungstag der Anmeldung: 19.03.2003
(73) Patentinhaber: Carl Zeiss Meditec AG, 07745 Jena (DE)
(72) Erfinder: FEIGE, Torsten, 07749 Jena (DE); GODER, Claus, 90491 Nürnberg (DE); HOLLERBACH, Thomas, 07745 Jena (DE)
(74) Vertreter: Schnekenbühl, Robert Matthias L.
(86) Internationale Anmeldenummer: PCT/EP2001/005638
(87) Internationale Veröffentlichungsnummer: WO 2001/087199

(56) Entgegenhaltungen:
- EP-A- 0 583 982
- EP-A- 0 763 762
- EP-A- 0 930 772
- WO-A-93/16631
- DE-C- 19 727 573
- US-A- 4 404 571
- US-A- 4 675 501
- US-A- 5 444 239
- US-A- 5 601 737
- US-A- 6 005 243
- US-A- 6 038 051
- PATENT ABSTRACTS OF JAPAN vol. 1997, no. 08, 29. August 1997 (1997-08-29) & JP 09 103893 A (NEC CORP), 22. April 1997 (1997-04-22)

## Beschreibung

Die Erfindung betrifft eine Vorrichtung zur Kontrolle der Energie und/oder Position eines gepulsten und gescannten Laserstrahles für einem ophthalmologischen Excimerlaser, wie in Anspruch 1 definiert. Insbesondere betrifft die Erfindung eine Vorrichtung zur Messung der Energie eines gepulsten Laserstrahles zur Erfassung des Ist-Wertes für eine Enerieregelung und gleichzeitiger Überprüfung der vollen Funktionstüchtigkeit einer Strahlablenkeinheit und Optikjustierung eines ophthalmologischen Excimerlasers zur Hornhautchirurgie.

Laserenergie wird mittels optischer Photodioden, pyroelektrischen oder thermophilen Sensoren gemessen. Hierzu wird in der Regel immer ein Teil der Laserstrahlung über einen Teilerspiegel (Splitter) oder eine Glasplatte auf einen Sensor geleitet. Die dort gemessene Energie wird dann als zu der im Bearbeitungsfeld applizierten Energie proportional angesehen, entsprechend dem Teilungsverhältnis bei der Auskopplung. Energieverluste von sich ändernden Transmissionsverhältnissen des nachfolgenden optischen Systems aufgrund defekter Optiken oder steigender Absorption in Luft werden hier nicht erkannt und ausgeglichen.

Bei einer Strahlablenkeinheit (Scanner) kann die korrekte Funktion des Scanners über eine Erfassung der Position der Spiegel des Scanners erfolgen. Dabei wird die Position des Spiegels über eine kapazitive oder optische Positionserfassung der Halterung des Spiegels bestimmt. Bei dieser selbständigen kapazitiven oder optischen Positionserfassung im Scanner (closed loop) meldet bei einer Änderung der Sollposition der Scanner dann zurück, wenn die entsprechende Position erreicht ist (position acknowledge signal). Bei kommerziell erhältlichen Scannern ist die Ortsauflösung der selbständigen Positionsüberwachung allerdings zu gering, so dass bei sehr kleinen Auslenkungen, bzw. Änderungen der Sollposition keine Änderung des position acknowledge signals erfolgt. Zudem kann damit auch nicht die tatsächliche Position des Laserstrahls erfasst werden. Ist das optische Strahlführungssystem z. B. aufgrund eines defekten Scannerspiegels dejustiert, wird dies nicht erkannt. Tritt ein Fehler bei der Sollwertvorgabe auf, z. B. durch ein verfälschtes Sollwertsignal aufgrund elektrischer Störungen oder durch ein fehlendes Signal aufgrund eines Kabelbruchs, kann dies ebenfalls nicht erkannt werden, da der Scanner selbständig auf das falsche Signal positioniert und die erreichte Position zurückmeldet, bzw. der Scanner seine alte Position beibehält und weiterhin eine korrekte Position vortäuscht.

Weiterhin ist es denkbar, die Position des Laserstrahles durch die Erfassung eines Hilfsstrahls im sichtbaren Bereich über eine Bilderfassungseinheit zu erfassen. Diese Fehler der Positionsüberprüfung der Strahlablenkeinheit können mit einem Bildverarbeitungssystem erkannt werden, indem mit einer Kamera die Position eines sichtbaren Zielstrahls im Bearbeitungsfeld erfasst und ausgewertet wird. Die Ist-Position kann dann mit der Soll-Vorgabe verglichen werden. Allerdings ist die mögliche Bearbeitungsgeschwindigkeit der Laseranlage durch die Bildwiederholrate der Kamera und die verhältnismäßig hohe Totzeit während der Bildauswertung begrenzt. Die Totzeit hängt im Wesentlichen von der Bearbeitungsgeschwindigkeit, bzw. Rechenkapazität des Bildverarbeitungssystems ab und reduziert nochmals die Bearbeitungsgeschwindigkeit des Gesamtsystems. Eine gleichzeitige Bestimmung der Energie ist nicht möglich.

In der US 6,038,051 wird eine Lichtscaneinrichtung beschrieben, die eine Vielzahl von Lichtstrahlen durch Umlenkmittel umlenkt.

In der US 5,444,239 wird ein faseroptisches System beschrieben, das in einem Laser-ROS-Scansystem verwendet wird, um einen Start von Scansignalen zu erzeugen.

DE 197 27 573 Lehrt eine Vorrichtung gemäß dem Oberbegriff des Anspruchs 2.

Aufgabe der vorliegenden Erfindung ist es daher eine Vorrichtung zur Kontrolle der Energie und/oder Position eines gepulsten und gescannten Laserstrahles bereitzustellen, mit denen die Bearbeitungsgeschwindigkeit und/ oder die Genauigkeit gegenüber den Vorrichtungen des Standes der Technik verbessert werden können.

Diese Aufgabe wird durch die Vorrichtung nach den unabhängigen Ansprüchen gelöst. Weitere vorteilhafte Ausgestaltungen sind in den abhängigen Ansprüchen angegeben.

Insbesondere wird die Aufgabe gelöst durch eine Vorrichtung zur Messung der Energie und/oder der Position eines gepulsten Laserstrahles (10), wobei der gepulste Laserstrahl (10) zeitweise auf einen Sensor (20) gelenkt wird und die Energie und/ oder die Position des gepulsten Laserstrahles (10) durch den Sensor (20) erfaßt wird. Als gepulster Laserstrahl kommt bevorzugt der Strahl eines ophthalmologischen Excimerlasers in Betracht. Dieser wird bevorzugt mit einer Frequenz von 35 Hz bis 1000 Hz, insbesondere von 300 Hz gepulst. Weitere bevorzugte Laser sind fs-Laser und frequenzverfünffachte Nd.YAG-Laser im Q-switch-Betrieb.

Als Sensor kann bevorzugt ein optischer Sensor, insbesondere Photodioden, pyroelektrischer Sensor oder ein termophiler Sensor eingesetzt werden. Besonders bevorzugt werden als Sensor pyroelektrische Sensoren eingesetzt.

Der Sensor ist bevorzugt so angeordnet, daß die Energie des auftretenden Strahles gemessen werden kann und/ oder die Position des Strahles ermittelt werden kann. Dazu ist der Sensor bevorzugt mit mehreren Sensorfeldern ausgestattet, so daß die Energie in den einzelnen Feldern gemessen werden kann und durch die Summenbildung die Gesamtenergie des Strahles und durch die Energieverteilung auf den verschiedenen Feldern die Position des Strahles ermittelt werden kann. Ein erster Anhalt für die Korrektheit der Position ist die Messung, ob der Strahl bei der gewählten Justierung überhaupt auf den Sensor bzw. ein Sensorfeld trifft. Besonders bevorzugt wird ein Quadrantensensor eingesetzt. Hierdurch ist sowohl die Energie in der Summe als auch in den einzelnen Quadranten erfaßbar. Hierdurch wird neben der Gesamtenergie auch die Position des Strahles erfaßt.

Diese Ablenkung des Strahles erfolgt besonders bevorzugt zeitweise, bevorzugt periodisch, d.h. daß dabei der ganze ungeteilte Strahl abgelenkt wird und nicht nur ein ausgekoppelter Anteil des Strahles. Dadurch kann der originär im Bearbeitungsbereich wirkende Strahl gemessen werden und nicht lediglich ein zu diesem Strahl korrelierender Strahl, wie dies bei den abgezweigten Strahlen im Stand der Technik der Fall ist. Dadurch werden auch entstehende Energieverluste - z.B. durch Ozonbildung im optischen System bis hin zum Strahlaustritt aus dem System - mit erfasst.

Durch die Auslenkung des Laserstrahles auf den Sensor wird gleichzeitig die korrekte Funktion der Scanner und der gesamten Strahllage im optischen System sichergestellt.

Bei einer weiteren erfindungsgemäßen Vorrichtung ist der Sensor (20) innerhalb einer Strahlablenkeinrichtung (30) angeordnet. Durch die Anordnung des Sensors innerhalb der Strahlablenkeinrichtung wird eine kompakte Bauweise ermöglicht, ohne daß ein abgesetzter Sensor einjustiert werden müßte. Damit gibt es keine Relativbewegung zwischen dem Sensor und dem Laser, so daß hier keine Korrekturen erforderlich sind. Besonders bevorzugt ist der Sensor hinter dem letzten optischen Element der Ablenkeinrichtungt angeordnet, so daß die Energie des gemessenen Strahles weitgehend der Energie des Strahles im Zielbereich entspricht.

Bei einer weiteren erfindungsgemäßen Vorrichtung wird der gepulste Laserstrahl (10) in regelmäßigen Intervallen auf den Sensor (20) gelenkt. Dadurch ist es möglich, eine periodische Ablenkung einfach umzusetzen. Es ist natürlich ebenfalls denkbar, die Periode im Betrieb zu ändern, um beispielsweise mit einer höheren Periode zeitweise eine intensivere Überwachung zu realisieren, was insbesondere bei der Behandlung kritischer Bereiche vorteilhaft ist.

Besonders bevorzugt erfolgt die Kontrolle der Schussparameter jeweils nach erfolgter vollständiger Teilkorrektur des Bearbeitungsbereichs, insbesondere von Linsen. Auf diese Weise ist es möglich, eine Bearbeitungsschrittfolge durchzuführen und erst anschließend eine Kontrolle der Schussparameter durchzuführen. Eine besonders bevorzugte Vorrichtung für eine Verfahrensformgebung von Oberflächen, insbesondere von Linsen, wird in der Patentschrift D19727573 beschrieben.

Bei einer weiteren erfindungsgemäßen Vorrichtung wird der gepulste Laserstrahl (10) mit einer Rate von 5 Hz bis 150 Hz, bevorzugt von 10 Hz bis 50 Hz, insbesondere bevozugt von 15 Hz bis 35 Hz auf den Sensor (20) gelenkt.

Durch diese Raten wird ein quasi-kontinuierliches Meßergebnis erhalten, das eine schnelle Reaktion bei der Veränderung der Randparameter zuläßt. Dadurch kann zeitnah korrigierend eingegriffen werden, falls sich die Energie oder Position des Strahles ungewollt ändert.

Bei einer weiteren erfindungsgemäßen Vorrichtung wird ein Einzelimpuls des gepulsten Laserstrahles (10) auf den Sensor (20) gelenkt. Durch die Ablenkung nur eines Einzelstrahles kann eine definierte Energiemenge gemessen werden und mit den Meßdaten der zuvor und danach gemessenen Datenreihe verglichen werden. Dadurch ist ein bereits klar definiertes Energievolumen auf den Sensor periodisch appliziert, so daß eine weitere Umrechnung größtenteils entfallen kann.

Bei einer weiteren erfindungsgemäßen Vorrichtung wird jeder fünfte bis jeder zweihundertste Einzelimpuls, bevorzugt jeder fünfte bis fünfzigste Einzelimpuls, besonders bevorzugt jeder zehnte bis dreißigste Einzelimpuls, insbesondere jeer fünfzehnte Einzelimpuls auf den Sensor (20) gelenkt. Dadurch wird eine quasikontinuierliche Messung ermöglicht, bei der bei einer Energieänderung unmittelbar reagiert und der Strahl angepaßt werden kann. Diese Rate wird bevorzugt im Zusammenspiel mit der gewählten Schußfrequenz festgelegt. Darüber hinaus wird diese Rate bevorzugt auch im Zusammenspiel mit der für die beabsichtigte Umformung benötigten Gesamtanzahl an Schüssen festgelegt. Bei hohen Puls-Frequenzen können mehrere Meßwerte aufgenommen werden, ohne die Behandlungsdauer maßgeblich zu beeinflussen. Bei einer bevorzugten Pulsfrequenz von 300 Hz ergibt sich eine bevorzugte Rate von 1:15, d.h. daß jeder fünfzehnte Einzelimpuls auf den Sensor abgelenkt wird.

Bei einer bevorzugten erfindungsgemäßen Vorrichtung zur Messung der Energie und/oder der Position eines gepulsten Laserstrahles (10), umfassend eine Strahlablenkeinrichtung (30), insbesondere einen Scannerblock, und einen Sensor (20) ist die Strahlablenkeinrichtung (30) so eingerichtet, daß ein hierüber geführter gepulster Laserstrahl (10) zeitweise auf den Sensor (20) lenkbar ist und durch den Sensor (20) die Energie und/ oder die Position des gepulsten Laserstrahles (10) erfaßbar ist. Durch eine solche erfindungsgemäße Vorrichtung wird vorteilhaft eine Apparatur zur Messung der Energie und/ oder der Position eines gepulsten Laserstrahles bereitgestellt.

Bei einer weiteren erfindungsgemäßen Vorrichtung nach dem vorhergehenden Anspruch weist der Sensor (20) mehrere Sensorfelder auf. Dadurch ist es vorteilhaft möglich, daß die Energie in den einzelnen Feldern gemessen werden kann und durch die Summenbildung die Gesamtenergie des Strahles und durch die Energieverteilung auf den verschiedenen Feldern die Position des Strahles ermittelt werden kann. Ein erster Anhalt für die Korrektheit der Position ist die Messung, ob der Strahl bei der gewählten Justierung überhaupt auf den Sensor bzw. ein Sensorfeld trifft. Insoweit kann vorteilhaft auch die Form und die Größe des Sensors bzw. der Sensorfelder so gewählt werden, daß die Position des Strahles genau ermittelt werden kann. Bevorzugt kann der Sensor auch so klein gewählt werden, daß bei einer Abweichung des Strahles kein Signal mehr durch den Sensor meßbar ist und so eine hohe Genauigkeit der Strahlpositionierung als Kriterium für den Betrieb zugrunde gelegt werden kann.

Bei einem ophtalmologischen Excimerlaser (1) zur refraktiven Hornhautchirurgie weist der Excimerlaser (1) eine Vorrichtung zur Messung der Energie und/ oder der Position eines gepulsten Laserstrahles (10) nach einem der vorhergenden Vorrichtungsansprüche auf. Auf diese Weise ist es möglich, den Laserstrahl in diesem kritischen Lasetsystem einzusetzen, um Operationen am menschlichen Auge noch sicherer zu machen.

Im folgenden sollen weitere vorteilhafte Ausgestaltungen der Erfindung an Hand der Zeichnung erläutert werden. Hierbei zeigt
- Fig. 1: einen schematischen Aufbau einer erfindungsgemäßen Vorrichtung zur Messung der Energie und/ oder der Position eines gepulsten Laserstrahles mit Integration des Sensors in eine Absaugeinrichtung;
- Fig. 2: einen schematischen Aufbau einer erfindungsgemäßen Vorrichtung zur Messung der Energie und/ oder der Position eines gepulsten Laserstrahles mit Positionierung des Sensors unterhalb des Umlenkspiegels; und
- Fig. 3: einen schematischen Aufbau einer erfindungsgemäßen Vonichtung zur Messung der Energie und/ oder der Position eines gepulsten Laserstrahles mit Positionierung des Sensors oberhalb des Umlenkspiegels.

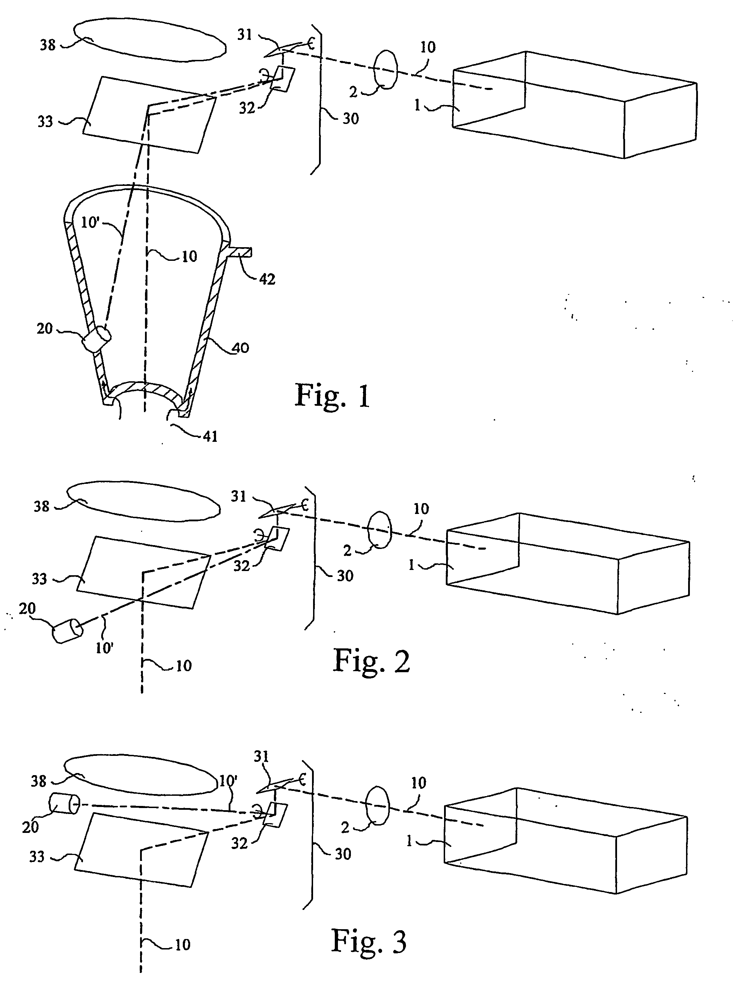

**Figur 1** zeigt einen schematischen Aufbau einer Vorrichtung zur Messung der Energie und/ oder der Position eines gepulsten Laserstrahles mit Integration des Sensors in eine Absaugeinrichtung. Einer Laserquelle bzw. einem Excimerlaser 1 ist eine Strahlformungsoptik 2 (symbolisch als einzelne Linse dargestellt), eine Strahlablenkeinrichtung 30, bestehend aus einem ersten Scannerspiegel 31 für die x-Achse und einen zweiten Scannerspiegel 32 für die y-Achse, sowie einem Umlenkspiegel 33 nachgeordnet. Vor dem Bearbeitungsbereich ist eine Absaugeinrichtung 40 vorgesehen, in der Ablationsprodukte 41 aus dem Bearbeitungsbereich entfernt werden können. Innerhalb der Absaugeinrichtung ist ein Sensor 20 angeordnet. Über ein Mikroskopobjektiv 38 kann durch die Absaugeinrichtung hindurch der Bearbeitungsbereich beobachtet werden.

In Betrieb wird ein Laserstrahl 10 vom Excimerlaser 1 generiert und über den ersten Scannerspiegel 31, sowie den zweiten Scannerspiegel 32 auf den Umlenkspiegel gerichtet. Von dort wird der Strahl durch die Absaugeinrichtung 40 auf den Bearbeitungsbereich gerichtet. Über das Mikroskopobjektiv 38 kann der Operator nun den Vorgang der Wirkung des Laserstrahls 10 im Bearbeitungsbereich verfolgen. Durch eine Bewegung des ersten Scannerspiegels 31, sowie des zweiten Scannerspiegels 32 wird der Strahl 10 auf einen Pfad eines Laserstrahls 10' abgelenkt. Diese Ablenkung erfolgt nach den vorher gewählten Parametern genau so, dass der abgelenkte Strahl 10' auf den Sensor 20 trifft. Hierzu werden immer einzelne Pulse des Laserstrahls ausgekoppelt - danach werden die ersten und zweiten Scannerspiegel 31 bzw. 32 wieder in ihre Arbeitsposition verstellt. Der Laserstrahl 10 bleibt weiterhin im Bearbeitungsbereich.

Besonders vorteilhaft ist, dass die von Sensor 20 gemessene Energie des Einzelimpulses genau der Energie des Laserstrahles 10 im Bearbeitungsbereich entspricht, da dieser Laserstrahl durch das gesamte optische System bereits hindurchgetreten ist, so dass eine Umrechnung oder Abschätzung weiterer Verluste, bzw. Dämpfungen nicht erfolgen muss. Des weiteren wird durch die Ablenkung des Strahles über den ersten, bzw. zweiten Scannerspiegel 31, bzw. 32 gleichzeitig die Funktionsweise der Strahlablenkeinrichtung 30 überprüft, da der abgelenkte Strahl 10' nur dann auf den Sensor 20 aufzutreffen vermag, wenn die einzelnen optischen Elemente der Strahlablenkeinrichtung 30 korrekt positioniert und funktionsfähig sind.

**Figur 2** zeigt einen schematischen Aufbau einer erfindungsgemäßen Vorrichtung zur Messung der Energie und/ oder der Position eines gepulsten Laserstrahles 10 mit Positionierung des Sensors 20 unterhalb des Umlenkspiegels 33. Der Strahl 10 kann über den Spiegel 32 an dem Umlenkspiegel vorbei auf den Sensor 20 gelenkt werden. Dadurch entfallen mögliche Ausrichtungen des Strahles auf den Sensor 20, da dieser dann schon eine fixierte Position innerhalb der Vorrichtung relativ zu der Strahlablenkeinrichtung 30 einnimmt.

**Figur 3** zeigt einen schematischen Aufbau einer erfindungsgemäßen Vorrichtung zur Messung der Energie und/ oder der Position eines gepulsten Laserstrahles 10 mit Positionierung des Sensors 20 oberhalb des Umlenkspiegels 33. Damit ist eine alternative Anordnung des Sensors innerhalb der Strahlablenkeinrichtung aufgezeigt.

Auf diese Weise wurde eine Vorrichtung zur Kontrolle und/oder Position eines gepulsten und gescannten Laserstrahls bereitgestellt, mit dem einfach und zuverlässig die Energie des Laserstrahles im Zielgebiet, bzw. Bearbeitungsbereich erfasst werden kann und vorzugsweise zusätzlich auch noch die korrekte Justierung der Strahlablenkeinrichtung quasi kontinuierlich überprüft und hergestellt werden kann.

### BEZUGSZEICHENLISTE

- 1: Laserquelle bzw. Excimerlaser
- 2: Strahlformungsoptik

- 10: Laserstrahl
- 10': Zur Messung abgelenkter Laserstrahl
- 20: Sensor

- 30: Strahlablenkeinrichtung
- 31: Erster Scannerspiegel (x-Achse)
- 32: Zweiter Scannerspiegel (y-Achse)
- 33: Umlenkspiegel
- 38: Mikroskopobjektiv
- 40: Absaugeinrichtung
- 41: Ablationsprodukte
- 42: Sauganschluß

## Patentansprüche

1. Vorrichtung zur Messung der Energie und/ oder der Position eines gepulsten Laserstrahles (10) für einen ophthalmologischen Excimerlaser (1) zur refraktiven Hornhautchirurgie, wobei die Vorrichtung folgendes umfasst:
eine Strahlablenkeinrichtung (30), insbesondere einen Scannerblock, sowie
einen Sensor (20)
**dadurch gekennzeichnet, dass**
die Strahlablenkeinrichtung (30) so eingerichtet ist, dass ein hierüber geführter gepulster Laserstrahl (10) zeitweise auf den Sensor (20) lenkbar ist und durch den Sensor (20) die Energie und/ oder die Position des gepulsten Laserstrahles (10) erfassbar ist.

2. Vorrichtung nach Anspruch 1,
**dadurch gekennzeichnet, dass**
der Sensor (20) mehrere Sensorfelder (25) aufweist.

3. Vorrichtung nach einem der vorhergehenden Ansprüche
**dadurch gekennzeichnet, dass**
der Sensor (20) innerhalb der Strahlablenkeinrichtung (30) angeordnet ist.

4. Vorrichtung nach einem der vorhergehenden Ansprüche
**dadurch gekennzeichnet, dass**
die Strahlablenkeinrichtung (30) so eingerichtet ist, dass ein hierüber geführter gepulster Laserstrahl (10) in regelmäßigen Intervallen auf den Sensor (20) lenkbar ist.

5. Vorrichtung nach einem der vorhergehenden Ansprüche
**dadurch gekennzeichnet, dass**
die Strahlablenkeinrichtung (30) so eingerichtet ist, dass ein hierüber geführter gepulster Laserstrahl (10) mit einer Rate von 100 Hz, bevorzugt von 50 Hz, insbesondere bevozugt von 15 Hz auf den Sensor (20) lenkbar ist.

6. Vorrichtung nach einem der vorhergehenden Ansprüche
**dadurch gekennzeichnet, dass**
die Strahlablenkeinrichtung (30) so eingerichtet ist, dass ein Einzelimpuls eines hierüber geführten gepulsten Laserstrahls (10) auf den Sensor (20) lenkbar ist.

7. Vorrichtung nach Anspruch 6
**dadurch gekennzeichnet, dass**
die Strahlablenkeinrichtung (30) so eingerichtet ist, dass jeder fünfte bis jeder zweihundertste Einzelimpuls, bevorzugt jeder zehnte bis einhundertste Einzelimpuls, besonders bevorzugt jeder zehnte bis dreißigste Einzelimpuls auf den Sensor (20) lenkbar ist.

## Claims

1. Device for measuring the energy and/or the position of a pulsed laser beam (10) for an ophthalmological excimer laser (1) for refractive corneal surgery, the device comprising the following:
a beam deflection apparatus (30), in particular a scanner block, and also
a sensor (20)
**characterized in that**
the beam deflection apparatus (30) is set up such that a pulsed laser beam (10) guided over same can temporarily be directed onto the sensor (20) and the energy and/or the position of the pulsed laser beam (10) can be recorded by the sensor (20).

2. Device according to claim 1,
**characterized in that**
the sensor (20) has several sensor fields (25).

3. Device according to one of the previous claims,
**characterized in that**
the sensor (20) is arranged inside the beam deflection apparatus (30).

4. Device according to one of the previous claims,
**characterized in that**
the beam deflection apparatus (30) is set up such that a laser beam (10) guided over same can be directed onto the sensor (20) at regular intervals.

5. Device according to one of the previous claims,
**characterized in that**
the beam deflection apparatus (30) is set up such that a laser beam (10) guided over same can be directed onto the sensor (20) at a rate of 100 Hz, preferably 50 Hz, particularly preferably 15 Hz.

6. Device according to one of the previous claims,
**characterized in that**
the beam deflection apparatus (30) is set up such that a single pulse of a pulsed laser beam (10) guided over same can be directed onto the sensor (20).

7. Device according to claim 6,
**characterized in that**
the beam deflection apparatus (30) is set up such that every fifth to every two-hundredth single pulse, preferably every tenth to one-hundredth single pulse, particularly preferably every tenth to thirtieth single pulse, can be directed onto the sensor (20).

## Revendications

1. Dispositif de mesure de l'énergie et/ou de la position d'un faisceau laser (10) pulsé pour un laser excimer (1) ophtalmologique destiné à la chirurgie réfractive de la cornée, le dispositif comprenant les éléments suivants : un dispositif de balayage de faisceau (30), notamment un bloc de balayage ainsi qu'
un capteur (20)
**caractérisé en ce que**
le dispositif de balayage de faisceau (30) est agencé de manière à ce qu'un faisceau laser (10) pulsé amené au-dessus puisse être dirigé de temps en temps sur le capteur (20) et que l'énergie et/ou la position du faisceau laser (10) pulsé puisse être déterminée par l'intermédiaire du capteur.

2. Dispositif selon la revendication 1, **caractérisé en ce que** le capteur (20) est muni de plusieurs champs de détection (25).

3. Dispositif selon l'une quelconque des revendications précédentes, **caractérisé en ce que** le capteur (20) est disposé à l'intérieur du dispositif de balayage de faisceau (30).

4. Dispositif selon l'une quelconque des revendications précédentes, **caractérisé en ce que** le dispositif de balayage de faisceau (30) est agencé de manière à ce qu'un faisceau laser (10) pulsé amené au-dessus puisse être dirigé à intervalles réguliers sur le capteur (20).

5. Dispositif selon l'une quelconque des revendications précédentes, **caractérisé en ce que** le dispositif de balayage de faisceau (30) est agencé de manière à ce que le faisceau laser (10) pulsé amené au-dessus puisse être dirigé sur le capteur (20) à une fréquence de 100 Hz, de préférence de 50 Hz, de manière particulièrement préférée de 15 Hz.

6. Dispositif selon l'une quelconque des revendications précédentes, **caractérisé en ce que** le dispositif de balayage de faisceau (30) est agencé de manière à ce que l'impulsion individuelle d'un faisceau laser (10) pulsé amené au-dessus peut être dirigé sur un capteur (20).

7. Dispositif selon la revendication 6, **caractérisé en ce que** le dispositif de balayage de faisceau (30) est agencé de manière à ce qu'une impulsion individuelle sur cinq à une impulsion individuelle sur cent, de préférence une impulsion individuelle sur dix à une impulsion individuelle sur cent, de manière particulièrement préférée une impulsion individuelle sur dix à une impulsion individuelle sur trente puisse être dirigée sur le capteur (20).
